# EUROPEAN PATENT APPLICATION

(11) **EP 4 645 563 A1**
(43) Date of publication of application: **05.11.2025**
(21) Application number: 24904163.3
(22) Date of filing: 04.12.2024
(51) Int. Cl.: H01M 50/342, H01M 50/538, H01M 50/169, H01M 50/152

(54) **BATTERY CELL HAVING STRUCTURE FOR PREVENTING SIDE WALL MEMBER OF CAN FROM RUPTURING**

(30) Priority: 14.12.2023 KR 20230182390; 27.08.2024 KR 20240114839
(71) Applicant: LG Energy Solution, Ltd., Seoul 07335 (KR)
(72) Inventor: CHO, Sung-Min, Daejeon 34122 (KR); HWANG, Dong-Sung, Daejeon 34122 (KR); PARK, Jeong-Ho, Daejeon 34122 (KR); HONG, Tae-Rim, Daejeon 34122 (KR)
(74) Representative: Goddar, Heinz J.
(86) International application number: PCT/KR2024/019765
(87) International publication number: WO 2025/127598

(57) **Abstract**

The present disclosure provides a battery cell including a can including a side wall extended in an axial direction, and an open end portion at an end portion of the side wall in the axial direction; a cap that covers the open end portion; an electrode assembly housed in the can; and a current collector plate electrically connecting the electrode assembly and the can, wherein an edge of the cap is joined to the end portion of the side wall in the axial direction, the cap includes a loop-shaped fracture inducement portion that is concentric with the edge of the cap, the current collector plate includes a body portion connected to an electrode tab of the electrode assembly; a loop-shaped can connection portion disposed on a more centrifugal side than the body portion and joined to at least one of the side wall or the cap; and a bridge having a centripetal side connected to the body portion and a centrifugal side connected to the can connection portion and extended in a radial direction, and the fracture inducement portion of the cap is disposed at an outer position than a centripetal side edge of the can connection portion in the radial direction.

## Description

### TECHNICAL FIELD

The present disclosure relates to a battery cell for preventing side wall rupture of a can in the event of thermal runaway.

This application is based on and claims priority from Korean Patent Application No. 10-2023-0182390, filed on December 14, 2023 and Korean Patent Application No. 10-2024-0114839, filed on August 27, 2024, with the Korean Intellectual Property Office, the disclosures of which are incorporated herein in its entirety by reference.

### BACKGROUND

As the electric vehicle market is growing rapidly, the demand for cylindrical lithium-ion batteries with high capacity and high voltage is increasing. Besides, there is the rising demand for safety. Cylindrical batteries are generally designed to have a notched part on the cap surface to induce fracture before thermal runaway occurs due to abnormal operation.

As cell capacity and voltage are higher, explosive power is stronger, but to achieve high capacity of batteries, there is a great demand for reduced thickness of battery can side wall. Accordingly, pressure and flames produced by thermal runaway are highly likely to damage the can side wall.

The manufacturing process of the battery cell including the cylindrical can includes the steps of deep-drawing a metal sheet to form a circular bottom and a circular tube-shaped side wall connected to the circular bottom, housing an electrode assembly in the can, and covering an open end portion of the side wall with a cap.

Meanwhile, a current collector plate is placed at one end of the electrode assembly facing the open end portion among two ends of the electrode assembly in the axial direction and contacts and is electrically connected to an electrode tab of the electrode assembly. The current collector plate is connected to the cap or the side wall by welding to make contact and electrical connection between them.

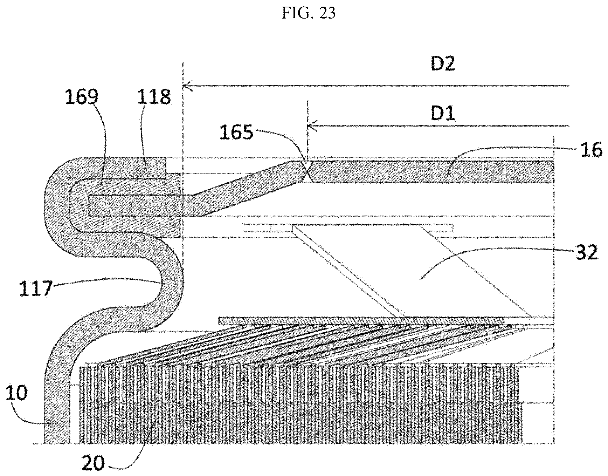

Referring to FIG. 23, when finishing the open end portion of the cylindrical can 10, in a state that the electrode assembly 20 is housed in the can 10, a predetermined part of the side wall located at the outer position than the electrode assembly in the axial direction is concavely beaded in the centripetal direction to form a beading portion 117. Subsequently, the current collector plate 32 is connected to the beading portion 117. Additionally, in a state that the edge of the cap 16 is placed on top of the beading portion 117, the end portion of the side wall in the axial direction is fixed by crimping in the centripetal direction. A gasket 169 is positioned between the edge of the cap and the side wall to form a seal between the cap and the side wall.

Meanwhile, the cap has a loop-shaped fracture inducement portion 165 configured to be fractured when the internal pressure of the can increases due to thermal runaway in the battery cell, in order to release gases and flames produced by the thermal runaway.

However, when the crimping structure is applied to fix the cap to the can as described above, because the crimping portion 118 is inwardly extended in the centripetal direction, it is difficult to increase the diameter D1 of the fracture inducement portion. That is, the diameter D1 of the fracture inducement portion is smaller than the inner diameter of the end portion of the crimping portion 118.

In contrast, due to the structural feature of having to fix the cap 16, the inner diameter D2 of the recessed part of the beading portion 117 is similar to or slightly smaller than the inner diameter of the crimping portion. Accordingly, in the event of thermal runaway, when the fracture inducement portion 165 is fractured and venting occurs, as shown in FIG. 24, bottlenecks A, B occur due to narrow venting passages that are smaller than the inner diameter D2 of the beading portion 117, and as a consequence, flames may break the beading portion 117, causing damage to the side wall.

In modules or packs of electric vehicles, when the side wall is ruptured in the event of thermal runaway in a single cell, other adjacent cells may be affected, and the thermal runaway may propagate across the entire battery pack system. Accordingly, because the side wall rupture of the cylindrical lithium-ion battery is directly related to user safety, there is an urgent need for a prevention structure.

### DISCLOSURE

### Technical Problem

The present disclosure is designed to solve the above-described problems, and therefore the present disclosure is directed to providing a battery cell having a structure for preventing side wall rupture of a battery can in the event of thermal runaway.

The technical problem of the present disclosure is not limited to the aforementioned objective and these and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

To solve the above-described problem, the present disclosure may be applied to a battery cell including an electrode assembly, a can accommodating the electrode assembly, and a cap that closes and seals an open end portion of the can.

The can includes including a side wall extended in an axial direction, and the open end portion at an end portion of the side wall in the axial direction.

An edge of the cap is joined to the end portion of the side wall in the axial direction. Additionally, the cap includes a loop-shaped fracture inducement portion that is concentric with the edge of the cap.

A current collector plate includes a body portion connected to an electrode tab of the electrode assembly; a loop-shaped can connection portion disposed on a more centrifugal side than the body portion and joined to at least one of the side wall or the cap; and a bridge having a centripetal side connected to the body portion and a centrifugal side connected to the can connection portion and extended in a radial direction, and the fracture inducement portion of the cap is disposed at an outer position than a centripetal side edge of the can connection portion in the radial direction.

When one end portion of the side wall in the axial direction is joined to the end portion of the cap in the radial direction without a crimping process for plastic deformation of the end portion of the side wall in the centripetal direction, it may be possible to increase the diameter of the fracture inducement portion.

A ratio of a diameter of the fracture inducement portion to a diameter of the battery cell may be equal to or larger than 38/46. More preferably, the ratio may be equal to or larger than 40/46.

The cap and the side wall may be joined by welding, brazing or soldering.

A bottom may be connected to the other end portion of the side wall in the axial direction, and the other end portion of the side wall in the axial direction may form a closed end portion.

The electrode assembly may have a jellyroll shape wound around a predetermined axis.

The current collector plate may be electrically connected to the electrode assembly.

The electrode assembly may have the electrode tab at the end portion corresponding to the open end portion among two end portions of the electrode assembly in the axial direction, and the current collector plate may be electrically connected to the electrode tab.

The current collector plate may include the body portion that contacts and is electrically connected to the electrode tab.

The body portion may include an electrode tab connection portion joined to the electrode tab.

The joining of the electrode tab connection portion and the electrode tab may be done by welding, brazing or soldering. Preferably, the joining may be done by laser welding using laser irradiation onto the surface of the electrode tab connection portion.

The body portion may include an inner ring portion connected to the electrode tab connection portion on the centripetal side of the electrode tab connection portion.

The can connection portion and the body portion may be electrically connected to each other.

The body portion may be disposed at an inner position than the can connection portion in the axial direction. That is, the can connection portion may be disposed at an outer position than the body portion in the axial direction.

The part of the can disposed at an outer position than the fracture inducement portion in the radial direction may be disposed at an outer position than the can connection portion of the current collector plate in the axial direction.

A ratio of an inner diameter of the centripetal side edge of the can connection portion to the diameter of the battery cell may be equal to or smaller than 40/46.

The can connection portion may be joined to the can or the side wall by welding, brazing or soldering.

A method of joining between the can connection portion and the can or the side wall may correspond to a method of joining between the can and the side wall.

The can connection portion may include an axial extension portion extended from the centrifugal side end portion in the axial direction.

The can connection portion may include a radial extension portion extended in the radial direction.

The axial extension portion may be connected to the radial extension portion through a bent portion.

The bent portion may bend the centrifugally extended radial extension portion outward in the axial direction.

The axial extension portion of the can connection portion may be extended outward from the bent portion in the axial direction.

The can connection portion may have a contact outer circumferential surface defined by the outer periphery of the can connection portion.

The contact outer circumferential surface may be defined by an outer circumferential surface of the axial extension portion.

The contact outer circumferential surface may face an inner circumferential surface of the side wall in the radial direction.

The can connection portion may have a cap contact surface defined by an outer end surface in the axial direction.

The cap contact surface may be defined by an end surface of the axial extension portion.

The cap contact surface may face and contact an inner surface of the cap in the axial direction.

Accordingly, it may be possible to form an axial gap of the radial extension portion of the can connection portion with respect to the connected part of the cap and the side wall by the axial length of the axial extension portion. In the corresponding area, the axial extension portion covers the inner circumferential surface of the side wall. Accordingly, it may be possible to further reduce the area of the inner circumferential surface of the side wall that may be directly exposed to flames.

Additionally, accordingly, the radial extension portion may be positioned near the electrode assembly, and the part of the side wall disposed at an inner position than the radial extension portion of the current collector plate in the axial direction may be far away from the outdoor air, thereby preventing the arrival of flames at the part of the side wall.

The cap may include a joint outer circumferential surface that faces the inner circumferential surface of the side wall in the radial direction.

The joint outer circumferential surface may contact the inner circumferential surface of the side wall in the radial direction.

The cap may have a current collector plate contact surface defined by the inner surface in the axial direction.

The current collector plate contact surface may face and contact the cap contact surface of the can connection portion of the current collector plate in the axial direction.

The joint outer circumferential surface of the cap may be disposed at an outer position than the current collector plate contact surface in the axial direction.

The joint outer circumferential surface of the cap may be disposed at an outer position than the current collector plate contact surface in the radial direction.

At least part of the inner circumferential surface of the side wall and at least part of the contact outer circumferential surface of the current collector plate may be joined together.

At least part of the inner circumferential surface of the side wall and at least part of the joint outer circumferential surface of the cap may be joined together. Preferably, the entire joint outer circumferential surface of the cap may be joined to the inner circumferential surface of the side wall.

At least part of the cap contact surface of the current collector plate and at least part of the current collector plate contact surface of the cap may be joined together.

The joining may be done by welding.

The side wall, the cap and the current collector plate may be triple-welded together.

The triple welding may include welding at least part of the side wall, at least part of the cap and at least part of the can connection portion of the current collector plate together.

The welding may be done by the laser irradiation onto the contact area of the inner circumferential surface of the side wall and the joint outer circumferential surface of the cap in the axial direction.

At least part of the inner circumferential surface of the side wall, at least part of the joint outer circumferential surface of the cap and at least part of the can connection portion of the current collector plate may be joined together by welding.

The battery cell may include a weld portion where the inner circumferential surface of the side wall, the joint outer circumferential surface of the cap and the can connection portion of the current collector plate are welded together.

Each of the joint outer circumferential surface of the cap and the contact outer circumferential surface of the can connection portion may face or contact the inner circumferential surface of the side wall in the radial direction.

The joint outer circumferential surface of the cap and the end portion of the inner circumferential surface of the side wall in the axial direction may face or contact each other in the radial direction and be exposed to the outside in the axial direction.

The weld portion may be formed by the laser irradiation in the axial direction onto the joint outer circumferential surface of the cap and the end portion of the inner circumferential surface of the side wall in the axial direction from the outside of the battery cell in the axial direction.

The cap may include a cap body, a thickness reduction portion and a joint portion in that order as it goes outward from the center in the radial direction.

In other words, the thickness reduction portion may be positioned on the centrifugal side of the cap body, and the joint portion may be positioned on the centrifugal side of the thickness reduction portion.

The joint outer circumferential surface of the cap may be positioned in the joint portion.

A first thickness of the joint portion may be smaller than a second thickness of the cap body.

Accordingly, the deformation of the cap by the internal pressure of the can may be minimized by increasing the second thickness of the cap body that occupies the overall shape of the cap, and the weld portion may be formed all over the joint outer circumferential surface in the axial direction by controlling the axial dimension of the weld part to the side wall, i.e., the joint outer circumferential surface, thereby increasing the strength of the cap itself and the strength of coupling of the cap to the side wall.

The fracture inducement portion may be positioned in the cap body having the second thickness. Accordingly, when the internal pressure of the can rises, deformation concentration may occur in the fracture inducement portion, inducing fracture.

### Advantageous Effects

According to the present disclosure, the diameter of the fracture inducement portion of the cap may be increased, and accordingly, the radial length of the centrifugal side part of the fracture inducement portion that is still joined to the can after it is fractured may be reduced. Accordingly, it may be possible to increase the venting area of gases and flames produced by thermal runaway, and minimize bottleneck caused by the remaining part of the cap. Accordingly, it may be possible to prevent side wall rupture.

According to the present disclosure, because the inner diameter of the can connection portion of the current collector plate at the bottom of the can is smaller than the diameter of the fracture inducement portion, it may be possible to minimize the direct contact of gases and flames produced by thermal runaway with the side wall between the can and the current collector plate. Accordingly, it may be possible to prevent side wall rupture in the can.

According to the present disclosure, because the axial extension portion of the can connection portion is joined to the inner circumferential surface of the side wall in an overlapping manner, it may be possible to reinforce the side wall of the corresponding area, thereby preventing side wall rupture.

According to the present disclosure, the radial extension portion of the can connection portion may be positioned close to the electrode assembly by the axial extension portion of the can connection portion, thereby minimizing the direct contact or arrival of gases and flames with the side wall located at the inner position than the radial extension portion in the axial direction. Accordingly, it may be possible to prevent side wall rupture.

According to the present disclosure, it is possible to ensure joinability (weldability) for joining the side wall, the cap and the current collector plate together.

According to the present disclosure, it may be possible to ensure process stability for joining (welding) the side wall, the cap and the current collector plate together.

According to the present disclosure, it may be possible to significantly reduce the assembly work of the battery cell by joining the side wall, the cap and the current collector plate together.

In addition to the above-described effects, the effects of the present disclosure will be described in detail below together with the detailed description of the embodiments of the present disclosure.

### BRIEF DESCRIPTION OF THE DRAWINGS

FIG. 1 is a perspective view of a cylindrical battery cell of an embodiment.
FIG. 2 is an exploded perspective view of an electrode assembly before winding that will be housed in a can of FIG. 1.
FIG. 3 is a perspective view of the electrode assembly of FIG. 2 in a stacked state before winding.
FIG. 4 is a perspective view of a cylindrical jellyroll-type electrode assembly in an assembled state by winding the stack of FIG. 3.
FIG. 5 is a perspective view showing a first current collector plate joined to an electrode tab of a first electrode of an electrode assembly.
FIG. 6 is a perspective view showing a second current collector plate joined to an electrode tab of a second electrode of an electrode assembly.
FIG. 7 is a perspective view of the second current collector plate of FIG. 6.
FIG. 8 is a cross-sectional view of FIG. 7, taken along the line 8-8.
FIG. 9 is a cross-sectional view of FIG. 7, taken along the line 9-9.
FIG. 10 is a perspective view depicting a part of the cross section of FIG. 8.
FIG. 11 is a side cross-sectional view showing a process of housing, in a can, an electrode assembly to which a current collector plate is joined.
FIG. 12 is a side cross-sectional view showing a process of joining a first current collector plate and a first electrode terminal of an electrode assembly housed in a can.
FIG. 13 is a side cross-sectional view showing a process of covering an open end portion of a can accommodating an electrode assembly with a cap.
FIGS. 14 and 15 are side cross-sectional views showing a process of closing, with a stopper, an injection port of a cap joined to a side wall of a can to close an open end portion.
FIGS. 16 and 17 are top and bottom perspective views of a cap of an embodiment.
FIG. 18 is an enlarged cross-sectional view of an area indicated by a dashed line at the open end portion of the battery cell of FIG. 15.
FIG. 19 is a cross-sectional view of a battery cell when viewed from a different position in a circumferential direction of FIG. 18.
FIG. 20 is a diagram showing a venting state in which a fracture inducement portion of a cap of FIG. 19 is fractured.
FIGS. 21 and 22 show a battery pack including a battery cell of an embodiment and a vehicle including the battery pack.
FIG. 23 is a cross-sectional view of a fixing structure of a cap having a beading portion and a crimping portion.

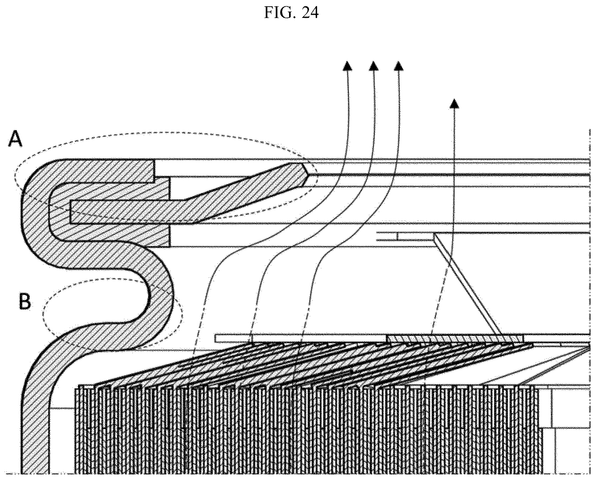

FIG. 24 is a diagram showing a venting state in which a venting state in which a fracture inducement portion of the cap of FIG. 23 is fractured.

### BEST MODE

The above-described objectives, features and advantages will be described in detail below with reference to the accompanying drawings, and accordingly persons having ordinary skill in the technical field pertaining to the present disclosure will easily practice the technical aspects of the present disclosure. In describing the present disclosure, when it is determined that a detailed description of relevant known technology may unnecessarily obscure the subject matter of the present disclosure, the detailed description is omitted. Hereinafter, exemplary embodiments according to the present disclosure will be described in detail with reference to the accompanying drawings. In the drawings, the same reference numerals are used to indicate the same or similar elements.

Although the terms first, second and so on, are used to describe various elements, these elements are not limited by these terms. The terms are used to distinguish one element from another, and unless expressly stated otherwise, a first element may be a second element.

Throughout this specification, unless expressly stated otherwise, each element may be singular or plural.

The term "on (or below)" may represent that an element is placed in contact with an upper surface (or a lower surface) of another element, and intervening elements may be present.

Additionally, when an element is referred to as being "connected to", "coupled to" or "contact" another element, it should be understood that the element may be directly connected to or contact the other element, or intervening elements may be present or each element may be "connected to", "coupled to" or "contact" each other through another element.

The singular forms as used herein include the plural forms unless the context clearly indicates otherwise. In this specification, the term "comprising" or "including" should not be construed as necessarily including all the stated elements or steps, and should be construed as not including some of the elements or steps, or further including additional elements or steps.

Throughout this specification, "A and/or B" may refer to either A or B or both unless expressly stated otherwise, and "C to D" may refer to C or more and D or less, unless expressly stated otherwise.

In describing an embodiment, an axial direction refers to an extension direction of an axis that forms a winding center of a jellyroll-type electrode assembly, a radial direction refers to a direction toward (centripetal) or away (centrifugal) from the axis, and a circumferential (peripheral) direction refers to a direction surrounding the axis.

In addition, a loop shape refers to a circular shape or a ring shape, "centrifugal" refers to a direction away from the axis that forms the winding center of the jellyroll-type electrode assembly, and "centripetal" refers to a direction toward the axis that forms the center of the axis that forms the winding center of the jellyroll-type electrode assembly.

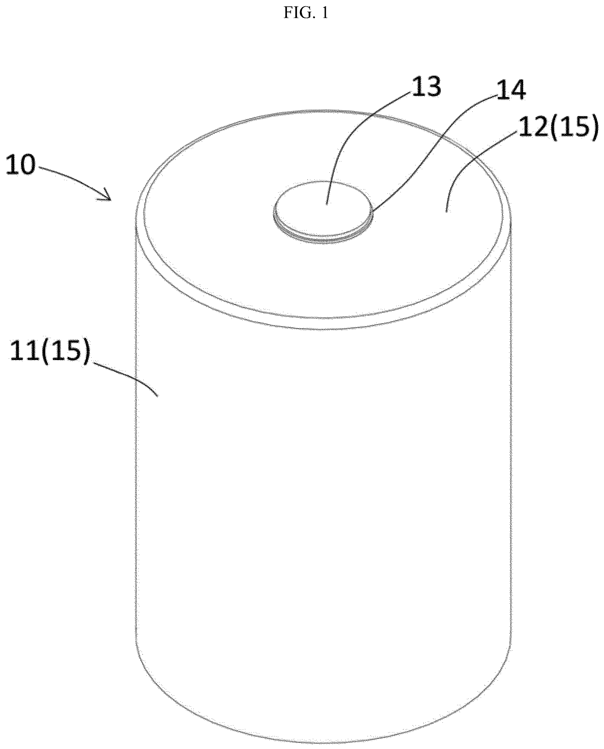

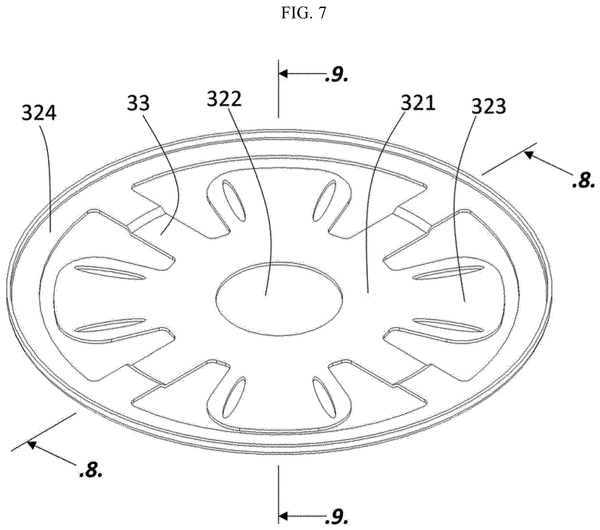

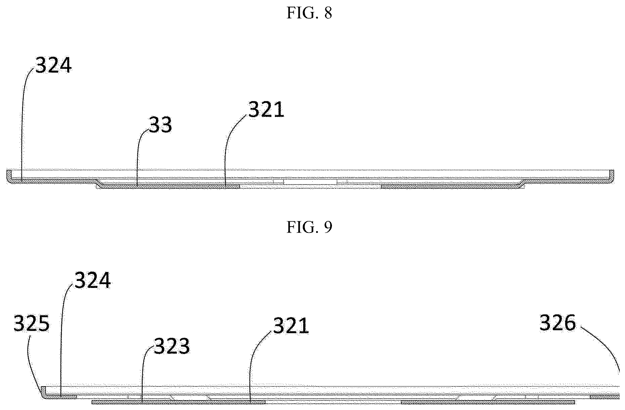

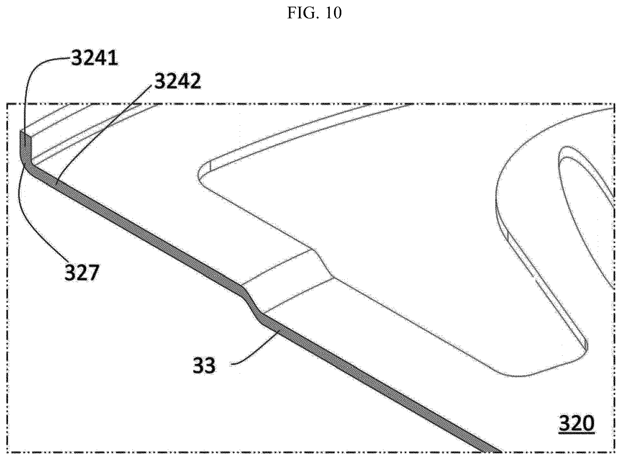

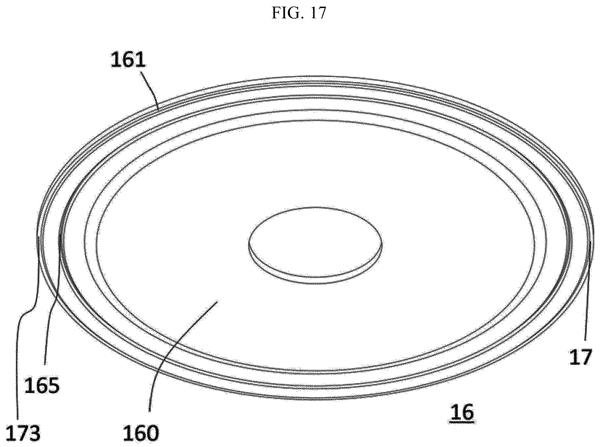

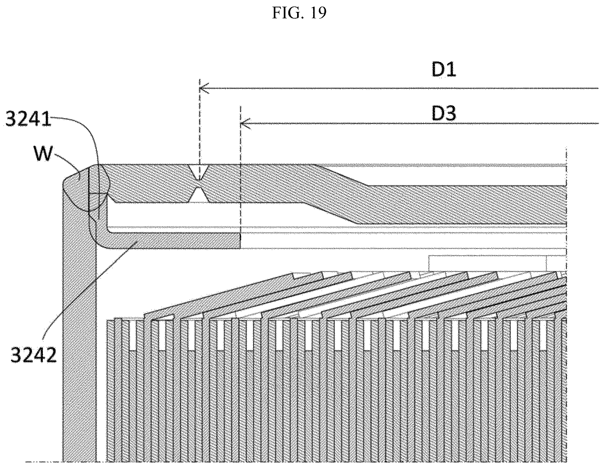

Hereinafter, an embodiment of a battery cell having a side wall rupture prevention structure of the present disclosure will be described in detail with reference to FIGS. 1 to 20.

The battery cell of the embodiment may be, for example, a cylindrical battery cell having a form factor ratio (defined as a value obtained by dividing the diameter Φ of the cylindrical battery cell to its height H, i.e., a height-to-diameter ratio) of greater than about 0.4.

Here, the form factor refers to a value representing the diameter and height of the cylindrical battery cell. The cylindrical battery cell may be, for example, 46110 cell, 48750 cell, 48110 cell, 48800 cell or 46800 cell. In the numerical value representing the form factor, the first two numbers represent the diameter of the cell, the next two numbers represent the height of the cell, and the last number 0 represents that the cross section of the cell is circular.

The battery cell may be a cylindrical battery cell having a roughly cylindrical shape with the diameter of approximately 46 mm, the height of approximately 110 mm and the form factor ratio of 0.418.

The battery cell according to another embodiment may be a cylindrical battery cell having a roughly cylindrical shape with the diameter of approximately 48 mm, the height of approximately 75 mm and the form factor ratio of 0.640.

The battery cell according to another embodiment may be a cylindrical battery cell having a roughly cylindrical shape with the diameter of approximately 48 mm, the height of approximately 110 mm and the form factor ratio of 0.418.

The battery cell according to another embodiment may be a cylindrical battery cell having a roughly cylindrical shape with the diameter of approximately 48 mm, the height of approximately 80 mm and the form factor ratio of 0.600.

The battery cell according to another embodiment may be a cylindrical battery cell having a roughly cylindrical shape with the diameter of approximately 46 mm, the height of approximately 80 mm and the form factor ratio of 0.575.

The present disclosure may also be applied to battery cells having the form factor ratio of about 0.4 or less, for example, 18650 cell or 21700 cell. In the case of 1865 cell, the diameter is approximately 18 mm, the height is approximately 65 mm, and the form factor ratio is 0.277. In the case of 21700 cell, the diameter is approximately 21 mm, the height is approximately 70 mm, and the form factor ratio is 0.300.

The battery cell of an embodiment includes an electrode assembly 20, current collector plates 31, 32 electrically connected to the electrode assembly 20 and a can 10 accommodating the electrode assembly 20 and the current collector plates 31, 32.

The can 10 includes a bottom 12, a side wall 11 connected to the bottom 12 and extended in the axial direction, and an open end portion at one end of the side wall 11 in the axial direction.

The can 10 includes a cap 16 that covers the open end portion.

The bottom 12 has a disc shape having a hole at the center, and the side wall 11 may have a circular tube shape.

The bottom 12 and the side wall 11 may be manufactured by forming a metal sheet having nickel plating on the surface of steel by deep drawing, and trimming using a punch while holding the end portion of the side wall 11 with a blank holder. The material of the can 10 is not limited thereto.

A first electrode terminal 13 may be fitted into the hole. The first electrode terminal 13 may be riveted to the bottom 12 with a gasket 14 interposed therebetween. The gasket 14 may be interposed between the first electrode terminal 13 and the bottom 12 to tightly seal the inside and outside of the can 10, thereby preventing electrolyte leaks and electrically insulating the first electrode terminal 13 from the bottom 12.

However, the method for connecting the first electrode terminal 13 to the bottom 12 is not limited thereto. Any other method may be used such as, for example, forming a seal between the first electrode terminal 13 and the bottom 12 and electrically insulating the first electrode terminal 13 from the bottom 12.

The first electrode terminal 13 may have first polarity, and the can 10 may have second polarity. That is, the bottom 12 of the can 10, the side wall 11 connected to the bottom 12 and the cap 16 connected to the side wall 11 as described below may all have second polarity.

Accordingly, the battery cell may have a first electrode terminal 13 and a second electrode terminal 15 at the end portion in the axial direction where the bottom 12 is present, i.e., a closed end portion as shown in FIG. 1. Additionally, the battery cell may have a busbar connected to the first electrode terminal 13 and a busbar connected to the second electrode terminal 15 on top of the battery cell. In an example, the first electrode terminal 13 may be a positive electrode terminal, and the second electrode terminal 15 may be a negative electrode terminal, and vice versa.

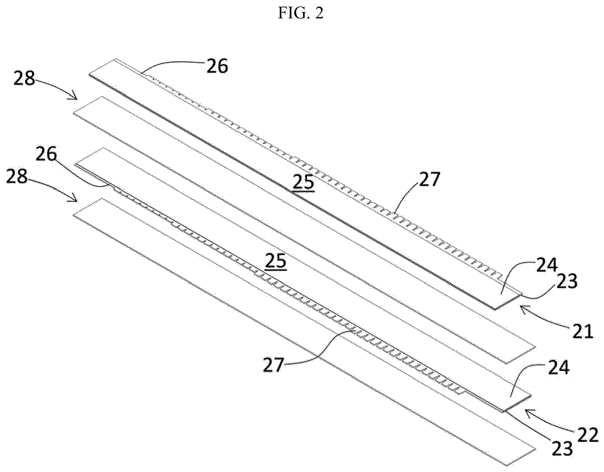

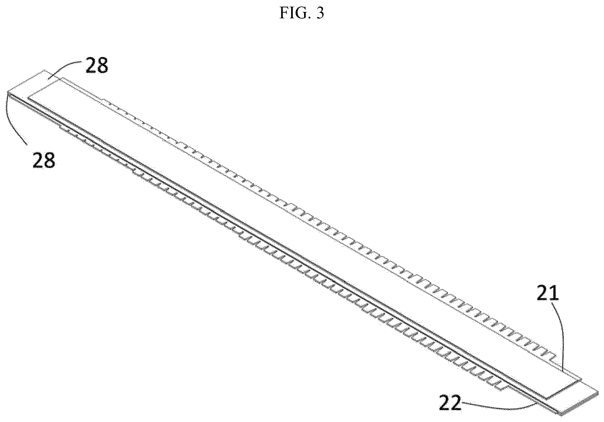

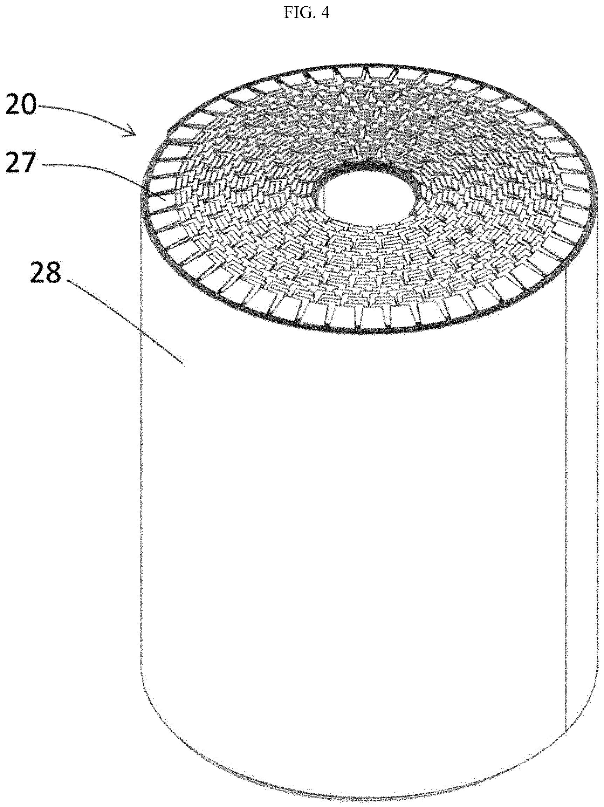

The electrode assembly 20 is housed in the can 10. The electrode assembly 20 is manufactured by preparing a first electrode 21, a second electrode 22 and a separator 28 extended with a predetermined width in the length direction as shown in FIG. 2, stacking the first electrode 21, the separator 28, the second electrode 22 and the separator 28 in that order to form a stack as shown in FIG. 3, and winding around the winding axis into a jelly roll shape as shown in FIG. 4. The first electrode 21 may be a positive electrode and the second electrode 22 may be a negative electrode, and vice versa.

The first electrode 21 and the second electrode 22 are manufactured in a sheet shape. The electrode sheet is manufactured in a way that an active material layer 24 is coated on the surface of a metal foil 23. The electrode sheet has a coated region 25 where the active material layer 24 is coated and an uncoated region 26 where the active material layer 24 is not coated. The positive electrode sheet has the uncoated region 26 on one side in the width direction, and the negative electrode sheet has the uncoated region 26 on the other side in the width direction.

The uncoated region 26 is exposed or protruded from the stack in the width direction. The uncoated region 26 itself acts as an electrode tab 27.

In the uncoated region 26, notches may be formed at a predetermined interval to form flag-shaped notching tabs 27.

In an embodiment, the notching tabs 27 having an equilateral trapezoidal shape are shown. However, the notching tabs 27 may come in various shapes, for example, semicircular, semi-elliptical, triangular, rectangular or parallelogram shape.

In addition, in an embodiment, the notching tabs 27 arranged along the length direction have the same width as shown. However, the notching tabs may become wider gradually or stepwise in the outward direction.

In addition, in an embodiment, the height of the notching tabs 27 increases stepwise in the outward direction as shown. However, the height of the notching tabs may be constant or gradually decrease.

In addition, in an embodiment, the notching tabs 27 are absent at a predetermined part of the centripetal side end portion and a predetermined part of the centrifugal side end portion of the uncoated region 26 as shown. However, the notching tabs may not be absent at the centripetal side end portion of the uncoated region, and the notching tabs may not be absent at the centrifugal side end portion of the uncoated region.

In the jellyroll-type electrode assembly 20, the notching tabs 27 may be bent in the radial direction and flattened as shown in FIG. 4. The notching tabs 27 may be bent in the centripetal direction or bent outward. In an embodiment, the notching tabs 27 are bent in the centripetal direction as shown.

The notching tabs 27 may be bent one by one in the process of winding the stack to form the jellyroll-type electrode assembly 20. In contrast, the notching tabs 27 may be bent at once after winding the stack to form the jellyroll-type electrode assembly.

The notching tabs 27 of the first electrode 21 and the notching tabs 27 of the second electrode 22 that are bent in the radial direction and overlap may provide a flat surface substantially perpendicular to the axial direction at two ends of the electrode assembly 20 in the axial direction, respectively.

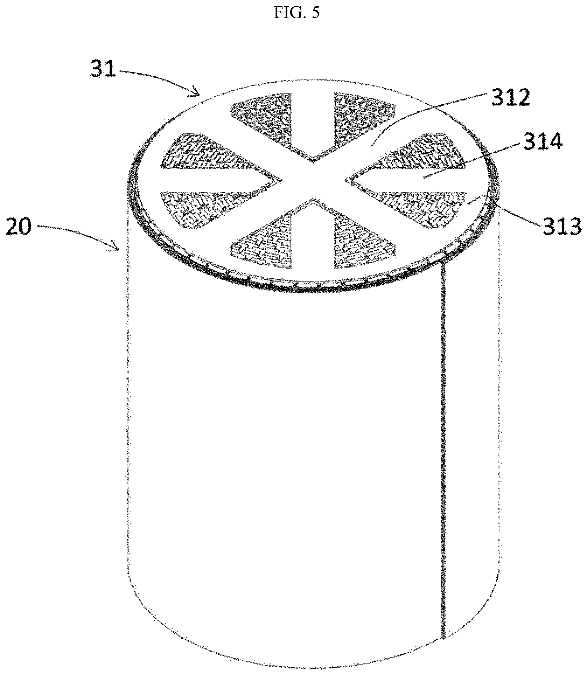

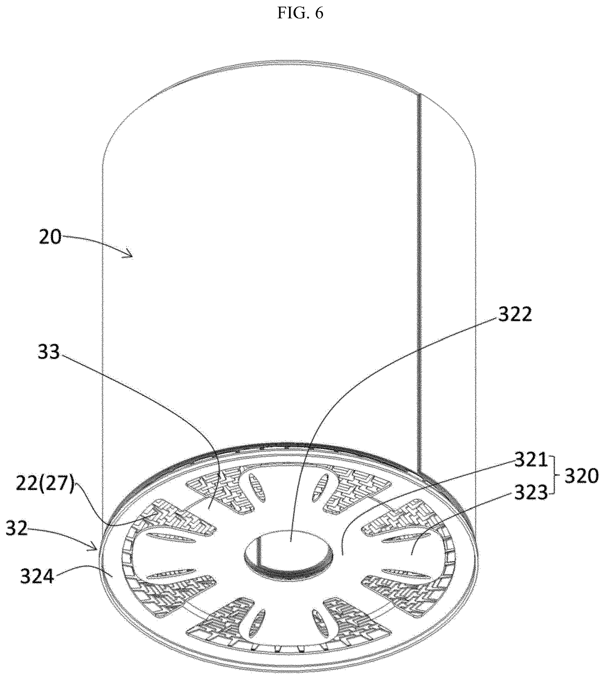

The first current collector plate 31 and the second current collector plate 32 may be joined to the substantially flat surfaces provided by bending the notching tabs 27 exposed to the two ends in the axial direction, respectively, as shown in FIGS. 5 and 6.

In an embodiment, the first current collector plate 31 is a positive collector plate and the second current collector plate 32 is a negative collector plate as shown. The first current collector plate 31 may be made of aluminum and the second current collector plate 32 may be made of copper.

The current collector plates 31, 32 may be manufactured by punching, trimming, piercing and bending the metal sheet.

Referring to FIG. 5, the first current collector plate 31 has a terminal connection portion 312 extended radially from the center, a ring portion 313 connecting the centrifugal side edge of the terminal connection portion 312 in the circumferential direction, and an electrode connection portion 314 extended from the ring portion 313 in the centripetal direction but not connected to the terminal connection portion 312. The central part of the terminal connection portion 312 covers at least a part of the winding core of the electrode assembly 20.

The electrode connection portion 314 may be joined to the notching tabs 27 of the first electrode 21 of the electrode assembly 20 by laser welding before placing the electrode assembly 20 in the can 10. The welding line of the laser may be extended radially.

Referring to FIGS. 6 to 9, the second current collector plate 32 includes a body portion 320 connected to the electrode tabs 27 of the electrode assembly 20 and an outer ring-shaped can connection portion 324 disposed on a more centrifugal side than the body portion 320, surrounding the edge of the second current collector plate 32. The loop-shaped can connection portion 324 is spaced apart from the body portion 320 in the radial direction.

The second current collector plate 32 includes a bridge 33 connected to the body portion 320 on the centripetal side and the can connection portion 324 on the centrifugal side.

The body portion 320 includes an inner ring portion 321 that defines the hole 322 corresponding to the winding core of the electrode assembly 20 and is provided around the winding core, and an electrode tab connection portion 323 extended radially from the inner ring portion 321. The body portion 320 may be welded and electrically connected to the electrode tabs 27 of the electrode assembly 20 by the laser irradiation onto the electrode tab connection portion 323.

The electrode tab connection portion 323 may be joined to the notching tabs 27 of the second electrode 22 of the electrode assembly 20 by laser welding before placing the electrode assembly 20 in the can 10. The welding line of the laser may be extended radially.

The can connection portion 324 is electrically connected to the body portion 320 through the bridge 33 extended in the radial direction.

The can connection portion 324 includes a radial extension portion 3242 extended in the radial direction, a bent portion 327 disposed at the centrifugal side end portion of the radial extension portion 3242, and an axial extension portion 3241 extended outward from the bent portion 327 in the axial direction.

The bridge 33 may alternate with the electrode tab connection portion 323 in the circumferential direction. The bridge 33 may be connected to the inner ring portion 321.

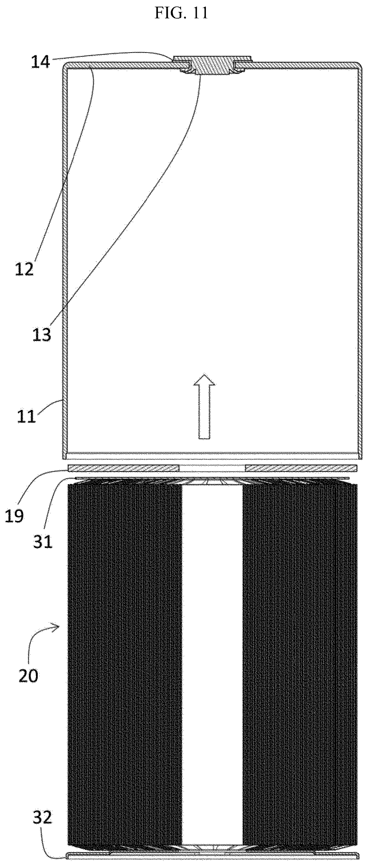

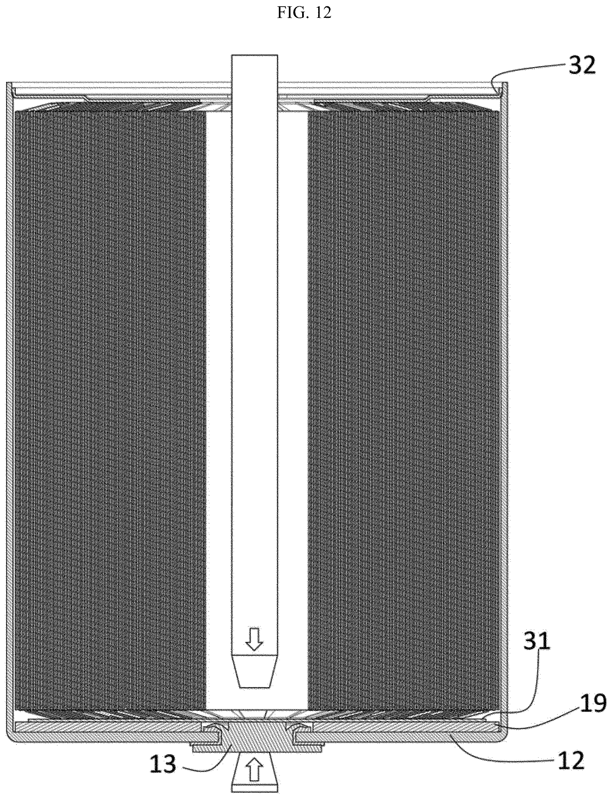

As shown in FIGS. 11 and 12, the electrode assembly 20 is housed in the can 10 with the first current collector plate 31 aligned toward the bottom 12 of the can 10. In this instance, an insulator 19 is interposed between the first current collector plate 31 and the bottom 12 of the can 10 to electrically insulate the first current collector plate 31 from the bottom 12.

Additionally, the terminal connection portion 312 of the first current collector plate 31 is joined to the first electrode terminal 13 fixed to the can 10 by resistance welding, ultrasonic welding or laser welding. A welding device for welding the first current collector plate 31 and the first electrode terminal 13 may perform welding from the open end portion of the can 10 toward the back surface of the center of the terminal connection portion 312 of the first current collector plate 31 through the winding core of the electrode assembly 20. Besides, the first current collector plate 31 and the first electrode terminal 13 may be joined by brazing or soldering. That is, any other method that electrically connects and fixes the first current collector plate 31 and the first electrode terminal 13 may be used.

In a state that the electrode assembly 20 is housed in the can 10, the electrode tabs 27 of the second electrode 22 and the second current collector plate 32 are placed, facing the open end portion of the side wall 11. Additionally, the outer circumferential surface of the second current collector plate 32 and the inner circumferential surface of the side wall 11 are tight-fitted into contact with each other.

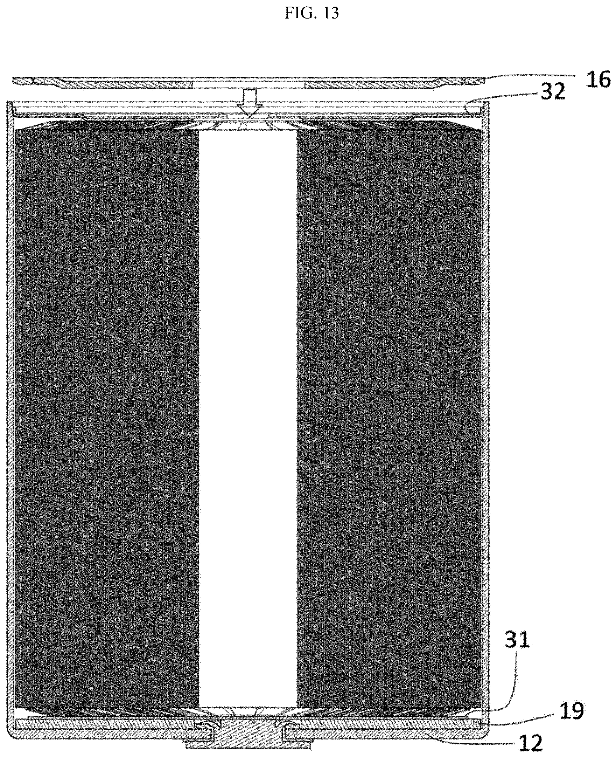

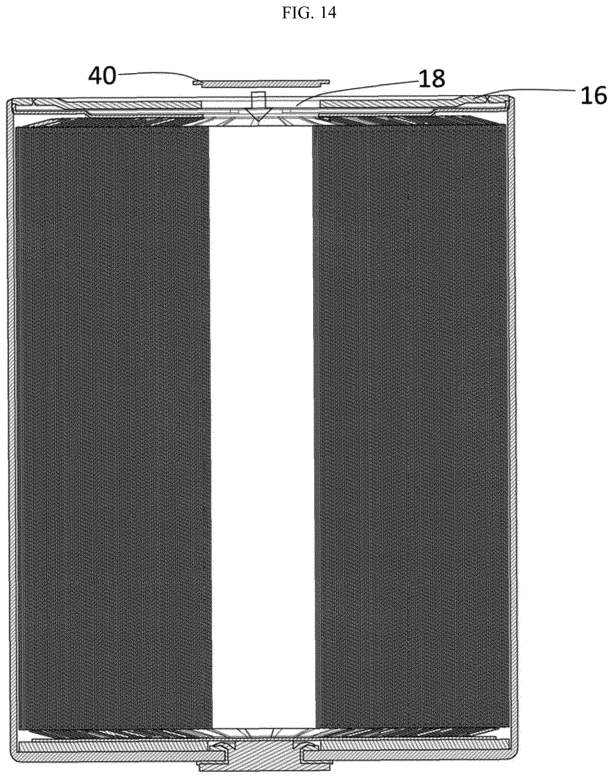

After the joining of the first current collector plate 31 and the first electrode terminal 13 is done, as shown in FIGS. 13 and 14, the open end portion of the side wall 11 is covered with the cap 16 and finished through seam welding, followed by electrolyte injection into the can 10 through an injection port 18 at the center of the cap 16.

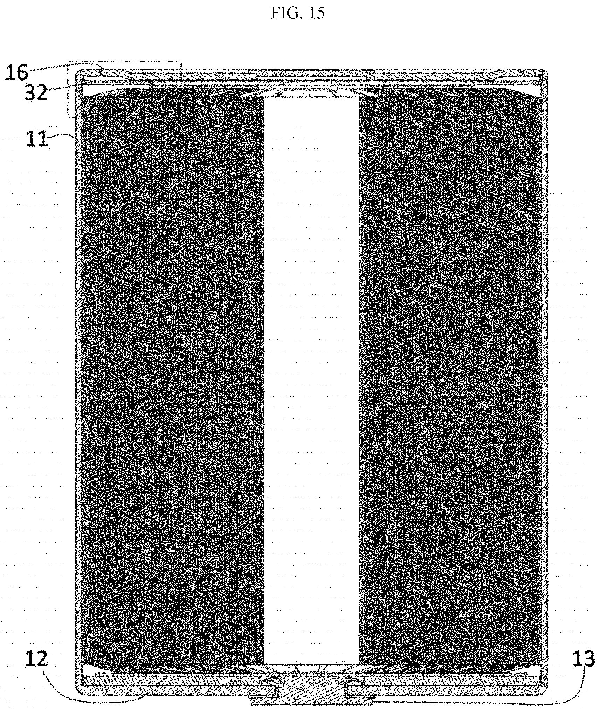

After the electrolyte injection, the injection port 18 may be closed by a stopper 40 as shown in FIGS. 14 and 15.

The welding structure of the present disclosure may be applied to the cap without the injection port. Accordingly, before covering the open end portion of the side wall 11 with the cap 16, electrolyte injection may be performed, and after the electrolyte injection is completed, the open end portion may be covered with the cap 16.

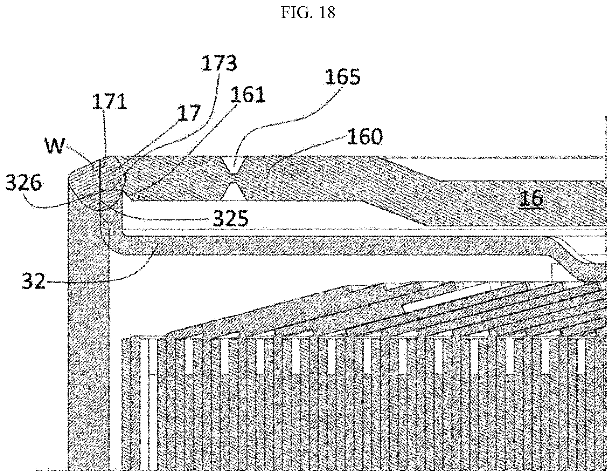

As shown in FIG. 18, the edge of the cap 16 and the edge of the side wall 11 may be joined by laser welding to seal the can 10.

The can connection portion 324 that is disposed at the edge of the second current collector plate 32 and contacts and is electrically connected to the can 10 includes a first region that faces or contacts the inner circumferential surface of the side wall 11. The first region has a contact outer circumferential surface 325 that faces or contacts the inner circumferential surface of the side wall 11 in the radial direction.

The can connection portion 324 includes a second region that contacts the cap 16. The second region has a cap contact surface 326 that faces and contacts the inner surface of the cap 16 in the axial direction.

The first region and the second region are present at the axial extension portion 3241 of the can connection portion 324.

The axial extension portion 3241 of the can connection portion 324 is connected to the outer side of the bent portion 327 in the axial direction and has a shape that extends outward from the bent portion 327 in the axial direction. Accordingly, it may be possible to increase the area and axial length of the contact outer circumferential surface 325 of the second current collector plate 32.

The material of the second current collector plate 32 may be softer than the material of the side wall 11.

Thermal conductivity of the second current collector plate 32 may be higher than thermal conductivity of the side wall 11.

For example, the material of the second current collector plate 32 may include copper, and the material of the side wall 11 may include iron.

The outer diameter of the contact outer circumferential surface 325 of the can connection portion 324 is set to be equal to or larger than the inner diameter of the inner circumferential surface of at least a part of the side wall 11 in the axial direction.

Accordingly, in the process of inserting the second current collector plate 32, the bent portion 327 is elastically deformed and the contact outer circumferential surface 325 and the inner circumferential surface of the side wall 11 are forced into close contact with each other in the radial direction.

The radial extension portion 3242 of the can connection portion 324 supports the exterior of the can connection portion 324 when the bent portion 327 is subjected to a force in the centripetal direction and elastically deformed.

The bent portion 327 provides a curved surface having the outer diameter that gradually decreases below the outer diameter of the axial extension portion 3241 of the can connection portion 324. Accordingly, it may be possible to guide the force fit of the can connection portion 324 and the inner circumferential surface of the side wall 11 in the process of inserting the second current collector plate 32 into the internal space of the side wall 11.

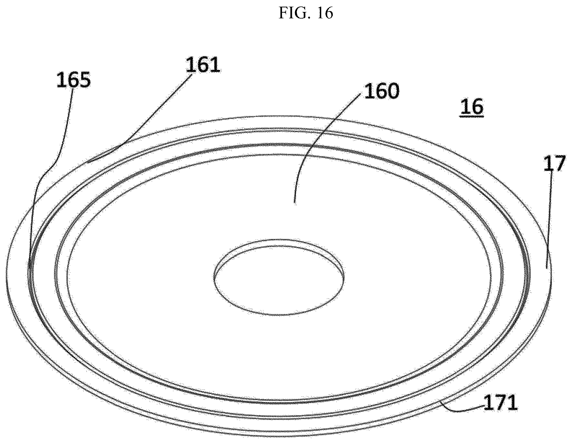

Referring to FIGS. 16 to 20, the cap 16 includes a cap body 160, a thickness reduction portion 161 and a joint portion 17 in that order as it goes outward from the center in the radial direction. That is, the thickness reduction portion 161 is disposed at the centrifugal side of the cap body 160, and the joint portion 17 is disposed at the centrifugal side of the thickness reduction portion 161.

The joint portion 17 of the cap 16 has a joint outer circumferential surface 171 that faces very closely or contacts the inner circumferential surface of the side wall 11 in the radial direction. In addition, the inner surface of the joint portion 17 of the cap 16 in the axial direction has a current collector plate contact surface 173 that faces and contacts the cap contact surface 326 of the can connection portion 324 of the second current collector plate 32 in the axial direction.

The thickness reduction portion 161 is a thickness change portion of the cap 16.

When the thickness reduction portion 161 is disposed at a properly selected position such that at least a part of the thickness reduction portion 161 may contact the second current collector plate 32, in the process of inserting the cap 16, the thickness reduction portion 161 of the cap 16 contacts the second current collector plate 32, and the center of the cap 16 is aligned. In an embodiment, to enhance the alignment effect, the thickness reduction portion 161 is in the shape of an inclined surface that is extended outward in the axial direction as it goes toward the centrifugal side.

In the process of inserting the cap 16 into the side wall 11, the thickness reduction portion 161 in the shape of the inclined surface contacts the centripetal side edge of the cap contact surface 326. Accordingly, the outer end portion of the can connection portion 324 of the second current collector plate 32 having the cap contact surface 326 in the axial direction may be pressed in the centrifugal direction by the thickness reduction portion 161, and move closer to or come into closer contact with the inner circumferential surface of the side wall 11.

Additionally, in the axial direction, the cap contact surface 326 present on the outer end surface of the can connection portion 324 of the second current collector plate 32 in the axial direction contacts the current collector plate contact surface 173 present on the inner surface of the joint portion 17 of the cap 16. According to this assembly structure, the insertion depth of the cap 16 may be accurately regulated by the height of the second current collector plate 32 that may rely on the extension length of the can connection portion 324 in the axial direction.

In the battery cell, in the contact area between the side wall 11, the cap 16 and the second current collector plate 32, a weld portion W is formed where the inner circumferential surface of the side wall 11, the joint outer circumferential surface 171 of the cap 16 and the axial extension portion 3241 of the can connection portion 324 of the second current collector plate 32 are welded together.

As shown, the joint outer circumferential surface 171 of the cap 16 and the end portion of the inner circumferential surface of the side wall 11 in the axial direction are in contact with each other in the radial direction and exposed to the outside in the axial direction.

The weld portion W is formed by laser irradiation onto the joint outer circumferential surface 171 of the cap 16 and the end portion of the second inner circumferential surface 115 of the side wall 11 in the axial direction from the outside of the battery cell in the axial direction.

The weld portion W includes a joined part of at least a part of the inner circumferential surface of the side wall 11 and at least a part of the contact outer circumferential surface 325 of the current collector plate 32, a joined part of at least a part of the inner circumferential surface of the side wall 11 and at least a part of the joint outer circumferential surface 171 of the cap 16, and a joined part of at least a part of the cap contact surface 326 of the current collector plate 32 and at least a part of the current collector plate contact surface 173 of the cap 16. Preferably, the entire joint outer circumferential surface 171 of the cap 16 may be welded. That is, the weld portion W may be formed by triple welding.

The contact area of the side wall 11 and the cap 16 is heated to high temperature by the laser L irradiated to form the weld portion W.

Accordingly, heat generated from the side wall 11 by the laser may be quickly spread and conducted through the second current collector plate 32 having a wider contact area, and heat generated from the cap 16 by the laser may be spread and conducted more slowly through the second current collector plate 32 having a narrower contact area. Accordingly, it may be possible to slow down the melting of the side wall 11 that is thinner than the joint portion 17 of the cap 16.

In addition, because most of the welding heat transmitted through the side wall 11 is spread through the second current collector plate 32, it may be possible to reduce the transfer of heat to the separator 28 of the electrode assembly 20 in contact with the inner circumferential surface of the side wall 11.

Meanwhile, as described above, in the cap 16, a first thickness of the joint portion 17 is smaller than a second thickness of the cap body 160 measured in the axial direction. Accordingly, the depth of the welding between the cap 16 and the side wall 11 is determined by the first thickness, and resistance to bulging in the cap 16 caused by thermal runawayinduced internal pressure rise of the can 10 is determined by the second thickness.

According to the present disclosure, even when the cap 16 and the side wall 11 are welded as deep as the first thickness, the contact area of the cap 16 and the side wall 11 may be completely joined and connected, so it may be possible to prevent stress concentration in the event of bulging, and the thicker cap body 160 having the second thickness may have greater bulging resistance.

In addition, according to the present disclosure, the thickness reduction portion 161 of the cap 16 for interaction with the can connection portion 324 in the assembly process is located at the centripetal side from the joint outer circumferential surface 171 as much as the thickness of the can connection portion 324 in the radial direction, so it may be possible to increase the area of the cap body 160 having the second thickness, thereby further increasing the bulging resistance. As the second current collector plate 32 is generally manufactured by a forming process involving pressing a thin metal sheet, it will be understood that the thickness reduction portion 161 may be positioned very close to the centrifugal side edge of the cap 16.

The cap 16 has the loop-shaped fracture inducement portion 165 that is substantially concentric with the edge of the cap 16. The fracture inducement portion 165 may be defined as a notched part having a small thickness in each of the surface of the cap 16 and its opposite surface.

The fracture inducement portion 165 may be positioned adjacent to the edge of the cap 16. According to an embodiment, the side wall 11 is extended in the axial direction and the end portion of the side wall 11 in the axial direction is joined to the edge of the cap 16 by welding in an unbent state in the centripetal direction, so the joined part of the can 10 and the cap 16 hardly occupies a space in the radial direction. Accordingly, the fracture inducement portion 165 may be positioned adjacent to the edge of the cap 16.

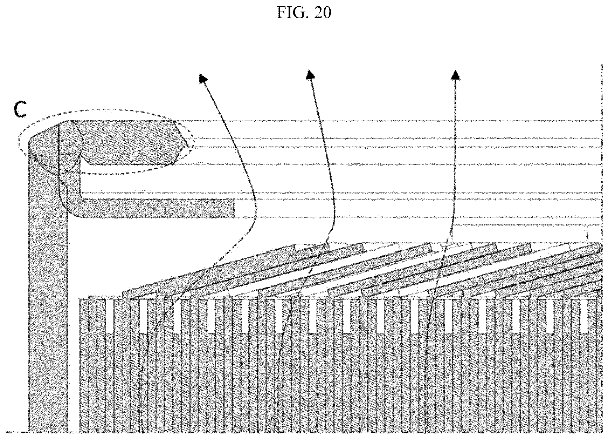

The larger diameter of the fracture inducement portion 165, the smaller radial area of the remaining part C of the cap 16 connected to the can 10 when the fracture inducement portion 165 is fractured in the event of thermal runaway as shown in FIG. 20. Accordingly, it may be possible to minimize or eliminate bottleneck in which gases and flames are not immediately vented and stay in the internal space of the can in the venting process.

Accordingly, it is possible to prevent the direct contact of flames with the side wall 11, thereby preventing side wall rupture and thermal runaway propagation to other adjacent cylindrical battery cell during venting of gases and flames in the event of thermal runaway in any battery cell of a battery pack.

A ratio of the diameter of the fracture inducement portion 165 to the diameter of the can 10 may be equal to or larger than 38/46. Obviously, the ratio is less than 1.

Preferably, the diameter ratio may be equal to or larger than 40/46. As a result of experiment, in a structure where the edge of the cap 16 is connected to the can 10 in a plane perpendicular to the side wall, when the ratio is equal to or larger than 38/46, side wall rupture does not occur during venting. In addition, when the ratio is equal to or larger than 40/46, it was confirmed that bottleneck does not occur during venting, thereby preventing the direct contact of flames with the side wall.

The fracture inducement portion 165 of the cap 16 may be positioned at the outer side than the centripetal side edge of the can connection portion 324 of the second current collector plate 32 in the radial direction. During venting, when the can connection portion 324 is further extended than the fracture inducement portion 165 of the cap 16 in the centripetal direction, gases and flames are released near the centripetal side edge of the can connection portion 324, and little or no oxygen flows into an inner space than the can connection portion 324 in the axial direction. Accordingly, it may be possible to minimize the direct contact of flames with the side wall 11 at the inner position than the can connection portion 324 in the axial direction.

A ratio of the inner diameter of the centripetal side edge of the radial extension portion 3242 of the can connection portion 324 to the diameter of the can 10 may be equal to or smaller than 42/46. Preferably, the ratio may be equal to or smaller than 40/46.

When the ratio of the inner diameter of the radial extension portion 3242 is equal to or larger than 42/46, it is impossible to sufficiently increase the length of the radial extension portion 3242, so when tight-fitting the second current collector plate 32 and the inner periphery of the side wall 11 of the can 10, the radial extension portion 3242 alone is inadequate for supporting the axial extension portion 3241 in the centrifugal direction, and it is difficult to avoid the direct contact of flames with the side wall in the event of thermal runaway.

The ratio of the inner diameter of the centripetal side edge of the radial extension portion 3242 of the can connection portion 324 to the diameter of the can 10 may be equal to or larger than 36/46. Preferably, the ratio may be equal to or larger than 38/46. When the ratio is less than 36/46, the release of gases and flames may be impeded during venting.

According to the present disclosure, by the extension length of the axial extension portion 3241 of the can connection portion 324, the distance between the radial extension portion 3242 of the can connection portion 324 and the can 10 may be defined. Accordingly, the distance between the radial extension portion 3242 and the electrode assembly 20 in the axial direction may be adjusted. As the distance between the radial extension portion 3242 and the electrode assembly 20 increases, the influence of the welding heat of the can 10 and the cap 16 on the electrode assembly 20 may decrease, but the side wall 11 between the radial extension portion 3242 and the electrode assembly 20 in the axial direction is more likely to be directly exposed to flames during venting.

According to the present disclosure, the length of the axial extension portion 3241 may be determined within a range in which the welding heat of the can 10 and the cap 16 does not affect the electrode assembly 20 and the part of the side wall 11 present at the inner position than the radial extension portion 3242 in the axial direction is not exposed to flames during venting, in order to avoid the influence of the welding heat on the electrode assembly 20 and prevent the exposure of the side wall 11 to flames during venting.

Meanwhile, as the axial extension portion 3241 is joined to the side wall 11 of the can 10 between the radial extension portion 3242 and the can 10, the can connection portion 324 may prevent the direct contact of flames with the side wall 11.

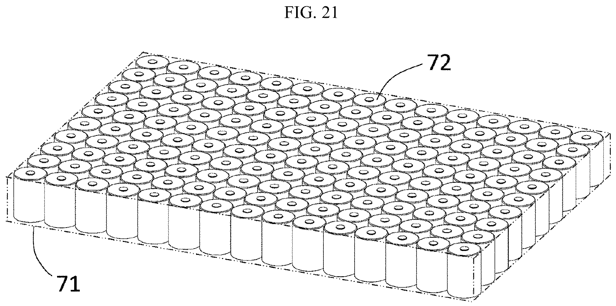

The battery cell 72 having the assembly structure of the second current collector plate, the cap and the can as described above may be housed in a housing 71 of the battery pack 70 as shown in FIG. 21. The battery pack 70 may be formed using a battery module which is an intermediate form of assembly, or the battery pack 70 may be directly formed without a battery module as shown.

Because the volume of the battery cell 72 itself is large, the intermediate structure or the battery module may not be used to manufacture the battery pack 70. In addition, the battery cell 72 has low internal resistance and high energy density. Accordingly, the energy density of the battery pack 70 including the battery cell 72 may be higher.

According to the present disclosure, it may be possible to ensure sufficient energy density of the battery cell 72, and prevent side wall rupture in the event of thermal runaway due to abnormal operation of the battery cell, thereby preventing thermal runaway propagation to adjacent battery cells. Accordingly, even when the pack is directly formed from the battery cell without the intermediate module, it may be possible to prevent thermal runaway propagation across the entire battery pack.

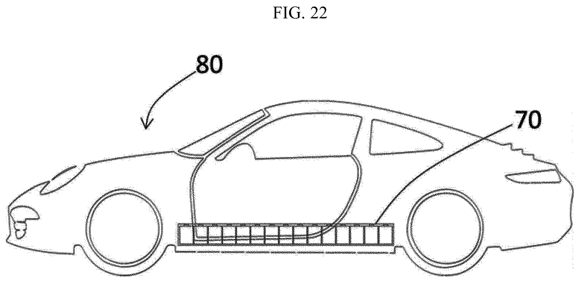

The battery pack 70 having improved safety and higher energy density may reduce the volume and weight for the same energy storage capacity. Accordingly, when the battery pack 70 including the battery cell 72 is mounted on a vehicle 80 using electricity as an energy source as shown in FIG. 22, it may be possible to increase the mileage of the vehicle relative to the energy.

The above-described embodiments are provided for illustrative purposes, but not intended to be limiting, and the scope of the present disclosure will be defined by the appended claims rather than the foregoing description. Additionally, it should be interpreted that all possible changes and modifications from the meaning and scope of the appended claims and their equivalent concept are included in the scope of the present disclosure.

Although the present disclosure has been described with reference to the drawings showing the present disclosure, the present disclosure is not limited to the disclosed embodiments and drawings, and it is obvious that a variety of modifications may be made thereto by those skilled in the art within the scope of the technical aspects of the present disclosure. Furthermore, in describing the embodiments of the present disclosure, even though the technical effects of the configuration of the present disclosure are not explicitly described in the foregoing description, predictable effects from the corresponding configuration should be acknowledged.

### [List of Reference Numerals]

10: Can
11: Side wall
117: Beading portion
118: Crimping portion
12: Bottom
13: First electrode terminal (positive electrode terminal)
14: Gasket
15: Second electrode terminal
16: Cap
160: Cap body
161: Thickness reduction portion
165: Fracture inducement portion
169: Gasket
17: Joint portion
171: Joint outer circumferential surface
173: Current collector plate contact surface
18: Injection port
19: Insulator
20: Electrode assembly
21: First electrode
22: Second electrode
23: Metal foil
24: Active material layer
25: Coated portion
26: Uncoated portion
27: Electrode tab (Notching tab)
28: Separator
31: First current collector plate (Positive current collector plate)
312: Terminal connection portion
313: Ring portion
314: Electrode connection portion
32: Second current collector plate (Negative current collector plate)
320: Body portion
321: Inner ring portion
322: Hole
323: Electrode tab connection portion
324: Can connection portion
3241: Axial extension portion
3242: Radial extension portion
325: Contact outer circumferential surface
326: Cap contact surface
327: Bent portion
33: Bridge
40: Stopper
W: Weld portion
70: Battery pack
71: Housing
72: Battery cell
80: Vehicle

## Claims

1. A battery cell comprising:
a can including a side wall extended in an axial direction, and an open end portion at an end portion of the side wall in the axial direction; a cap that covers the open end portion; an electrode assembly housed in the can; and a current collector plate electrically connecting the electrode assembly and the can,
wherein an edge of the cap is joined to the end portion of the side wall in the axial direction,
wherein the cap includes a loop-shaped fracture inducement portion that is concentric with the edge of the cap,
wherein the current collector plate includes:
a body portion connected to an electrode tab of the electrode assembly;
a loop-shaped can connection portion disposed on a more centrifugal side than the body portion and joined to at least one of the side wall or the cap; and
a bridge having a centripetal side connected to the body portion and a centrifugal side connected to the can connection portion, and extended in a radial direction, and
wherein the fracture inducement portion of the cap is disposed at an outer position than a centripetal side edge of the can connection portion in the radial direction.

2. The battery cell according to claim 1,
wherein the cap and the side wall are joined by welding, brazing or soldering.

3. The battery cell according to claim 1,
wherein a ratio of a diameter of the fracture inducement portion to a diameter of the battery cell is equal to or larger than 38/46.

4. The battery cell according to claim 1, wherein the can connection portion is joined to the can or the side wall by welding, brazing or soldering.

5. The battery cell according to claim 1, wherein a joining method of the can connection portion and the can or the side wall corresponds to a joining method of the cap and the side wall.

6. The battery cell according to claim 1,
wherein a ratio of an inner diameter of the centripetal side edge of the can connection portion to a diameter of the battery cell is equal to or smaller than 40/46.

7. The battery cell according to claim 1,
wherein the can connection portion includes:
a radial extension extended in a radial direction;
an axial extension portion extended from a centrifugal side end portion of the radial extension portion in the axial direction;
a contact outer circumferential surface that is defined by an outer circumferential surface of the axial extension portion and faces and contacts an inner circumferential surface of the side wall; and
a cap contact surface that is defined by an outer end surface of the axial extension portion in the axial direction and faces and contacts an inner surface of the cap in the axial direction.

8. The battery cell according to claim 7,
wherein the cap includes a current collector plate contact surface that is defined by the inner surface in the axial direction and faces and contacts the cap contact surface of the can connection portion of the current collector plate in the axial direction.
